# EUROPÄISCHE PATENTSCHRIFT

(11) **EP 0 647 493 B1**
(45) Veröffentlichungstag und Bekanntmachung des Hinweises auf die Patenterteilung: **12.11.1997**
(21) Anmeldenummer: 94113172.4
(22) Anmeldetag: 24.08.1994
(51) Int. Cl.: B23F 21/16, B23F 23/12

(54) **Voll-Cermet Wälzfräser**
Solid cermet hob
Fraise-mère en cermet solide

(30) Priorität: 09.09.1993 DE 9313618 U
(43) Veröffentlichungstag der Anmeldung: 12.04.1995
(73) Patentinhaber: Wilhelm Fette GmbH, D-21493 Schwarzenbek (DE)
(72) Erfinder: Peters, Walter, Dipl.-Ing., D-21522 Hohnstorf (DE)
(74) Vertreter: Patentanwälte Hauck, Graalfs, Wehnert, Döring, Siemons

(56) Entgegenhaltungen:
- EP-A- 0 213 334
- EP-A- 0 269 525
- EP-A- 0 447 648
- GB-A- 185 420
- GB-A- 391 544
- GB-A- 621 738
- 'MAAG-TASCHENBUCH' 1985 , MAAG-ZAHNRÄDER AG , ZÜRICH(CH) * Seite 438, Abschnitt "Vollstahl- Wälzfräser" *
- PATENT ABSTRACTS OF JAPAN vol. 9, no. 172 (M-397) 17. Juli 1985 & JP-A-60 044 220 (MITSUBISHI JUKOGYO KK)

## Beschreibung

Die Erfindung bezieht sich auf einen Wälzfräser; siehe z.B. MAAG-Taschenbuch, 1985, MAAG Zahnräder AG, Zürich, Seiten 438 und 439.

Wälzfräser sind bekanntlich Verzahnungswerkzeuge. Man unterscheidet Monoblock- bzw. Vollmaterialwälzfräser, Stollenwälzfräser, Wälzfräser mit gelöteten und/oder geklemmten Schneiden. Die vorliegende Erfindung bezieht sich auf einen Vollmaterialwälzfräser, d.h. das Werkzeug ist aus einem Block gefertigt.

Wälzfräser aus Hartmetall werden bekanntlich zum Bearbeiten von relativ harten, beispielsweise bereits gehärteten Werkstücken eingesetzt. Der Schneidstoff Hartmetall wird überwiegend durch einen Sinterprozeß hergestellt und besteht vor allem aus Wolfram-, Titan- und Tantalkarbid und einem Bindemittel (Hilfsmittel der Eisengruppe), z.B. dem überwiegend verwendeten Bindemittel Kobalt. Es ist bekannt, Wälzfräskörper mit Einsätzen aus Hartmetall zu versehen oder gesamte Werkzeugkörper aus Hartmetall zu formen.

Wegen der größeren Wärmehärte lassen sich mit Wälzfräsern aus Hartmetall größere Schnittgeschwindigkeiten als mit Wälzfräsern aus Hochleistungsschnellstahl (HSS) erzielen, es muß auch bei der Hartmetallausführung mit Kühlschmierstoffen gearbeitet werden. Aus Gründen der zunehmenden Umweltbelastungen müssen die anfallenden mit Kühlschmierstoffen versehenen Späne entsorgt werden.

Der Erfindung liegt daher die Aufgabe zugrunde, einen Wälzfräser zu schaffen, mit dem noch sehr viel höhere Schnittgeschwindigkeiten verwirklicht werden können und die entstehende Wärme im wesentlichen durch die Späne abgeführt wird und somit auf Kühlschmierstoffe verzichtet werden kann.

Diese Aufgabe wird durch die Merkmale des Anspruches 1 gelöst.

Der erfindungsgemäße Wälzfräser weist einen ringförmigen Werkzeugkörper aus Cermet auf, der auf einen zylindrischen Stahlkern aufgebracht ist.

Cermet oder auch Metallkeramik bezeichnet eine Gruppe von Werkstoffen aus zwei getrennten Phasen, d.h. aus einem metallischen und einem keramischen Bestandteil. Cermets zeichnen sich durch besonders hohe Wärmehärte, relativ schlechte Wärmeleitfähigkeit und besonders scharfe Schneidkanten aus. Allerdings sind sie im Vergleich zu zäheren Hartmetallen relativ spröde. Es ist bereits bekannt, Werkzeuge, beispielsweise auch Schaftfräser, aus Cermet zu fertigen. Es hat sich überraschenderweise herausgestellt, daß sich Werkzeugkörper auch mit größerem Durchmesser aus Cermet herstellen lassen, die den Beanspruchungen bei der Bearbeitung harter metallischer Werkstoffe gewachsen sind.

Ein Wälzfräser nach der Erfindung weist zwar eine erhebliche Sprödigkeit auf und muß daher behutsam gehandhabt werden. Er hat jedoch den Vorteil, daß sehr hohe Schnittgeschwindigkeiten ermöglicht werden, z. B. bis zu 800 m/min. Außerdem wird eine verbesserte Schnittqualität erreicht. Der Einsatz des erfindungsgemäßen Wälzfräsers erfolgt ohne Kühlschmierstoffe, was, wie schon erwähnt, aus umweltschonenden Gründen zu bevorzugen ist.

Der erfindungsgemäße Wälzfräser wird nach einer Ausgestaltung der Erfindung vorzugsweise auf einem Stahlkern exakt eingepaßt durch einen Form- und/oder Kraftschluß.

Die Formung des Rohlings für den erfindungsgemäßen Wälzfräser erfolgt im Sinterverfahren, wobei der Rohling z.B. bereits vorgeformte achsparallele Nuten haben kann. Für die Formung der einzelnen Fräserzähne wird ein anschließendes Spezialschleifverfahren angewendet.

Nach einer weiteren Ausgestaltung der Erfindung kann der Werkzeugkörper mit einer Hartstoff-Dünnschicht versehen werden, vorzugsweise mit Titannitrid. Derartige Beschichtungen sind in Verbindung mit Werkzeugen aus hochfesten Stählen und auch Hartmetallen bereits bekannt. Sie erhöhen die Härte der Schneidkanten und ermöglichen eine Gleitwirkung, so daß übergroße lokale Temperaturerhöhungen vermieden werden und die Verschleißfestigkeit des Werkzeuges gesteigert werden.

Obwohl der erfindungsgemäße Wälzfräser eine erhöhte Schnittgeschwindigkeit erlaubt, weist er eine höhere Standfestigkeit und auch Standzeit auf.

Die Erfindung wird nachfolgend anhand einer Zeichnung näher beschrieben.
- Fig. 1: zeigt die Seitenansicht eines Wälzfräsers nach der Erfindung.
- Fig. 2: zeigt einen Schnitt durch den Wälzfräser nach Fig. 1 entlang der Linie 2-2.

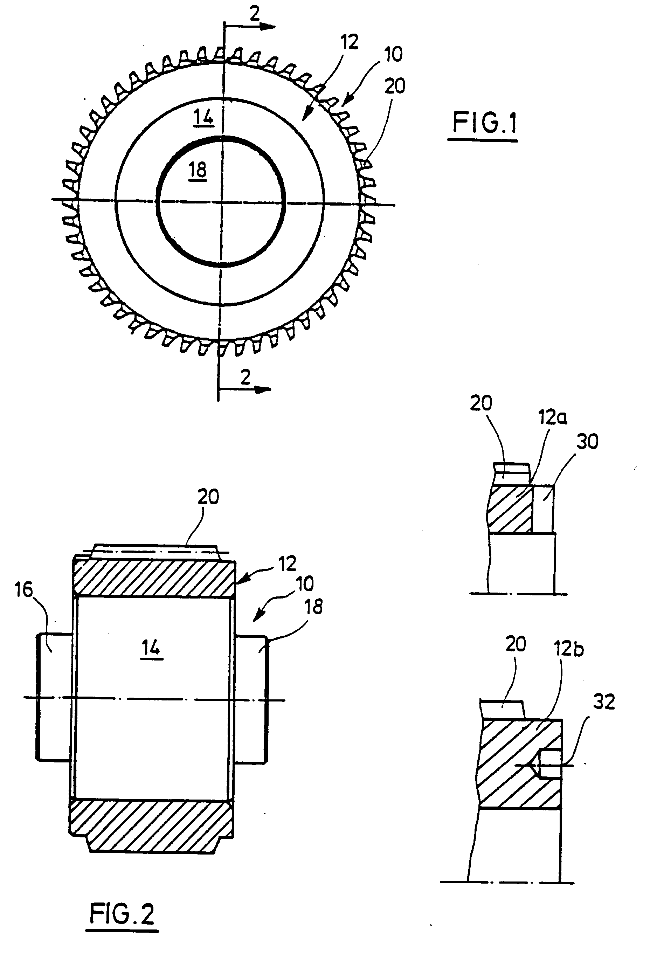

In den Fig. 1 und 2 ist ein Wälzfräser 10 dargestellt, der einen ringförmigen Werkzeugkörper 12 aufweist und einen zylindrischen Stahlkern 14, der an beiden Enden Zapfen 16, 18 besitzt zur Anbringung in einer Werkzeugmaschine. Der Werkzeugkörper 12 besitzt im Umfang Zähne 20, wie für Wälzfräser typisch.

Der Werkzeugkörper 12 ist aus einem Stück gefertigt und besteht aus Cermet. Bei der Herstellung wird aus einer geeigneten Metallkeramik z.B. ein mit Nuten versehener ringförmiger Rohling durch ein geeignetes Sinterformverfahren hergestellt, bei dem dann die Zähne 20 durch geeignete Schleifverfahren geformt werden. Der fertige Formling wird ggf. mit einer geeigneten Hartstoffschicht, beispielsweise Titannitrid (TiN) beschichtet. Er wird dann z.B. durch Lötung im Vakuumofen auf dem Stahlkern 14 befestigt.

Der gezeigte Werkzeugkörper ermöglicht ein Abwälzfräsen ohne Kühlschmierstoffe. Er erlaubt eine Steigerung der Schnittwerte sowie eine Verminderung des Schneidkantenverschleißes.

## Patentansprüche

1. Wälzfräser mit einem ringförmigen am Umfang Zähne (20) aufweisenden Werkzeugkörper (12) aus Cermet, der auf einen zylindrischen Stahlkern (14) aufgebracht ist.

2. Wälzfräser nach Anspruch 1, dadurch gekennzeichnet, daß der ringförmige Werkzeugkörper (12) auf dem Stahlkern (14) befestigt wird, z. B. durch Löten im Vakuumofen.

3. Wälzfräser nach Anspruch 1 oder 2, dadurch gekennzeichnet, daß der Ausgangskörper des Wälzkörpers (12) ein gesinterter am Umfang achsparallele Nuten aufweisender Rohling aus Cermet ist, dessen Verzahnung durch Schleifen fertiggestellt ist.

4. Wälzfräser nach Anspruch 1 bis 3, dadurch gekennzeichnet, daß der Ausgangskörper gewendelte Nuten aufweist.

5. Wälzfräser nach Anspruch 1 bis 3, dadurch gekennzeichnet, daß die Nuten aus dem Vollen geschliffen sind.

6. Wälzfräser nach Anspruch 1, dadurch gekennzeichnet, daß der Werkzeugkörper (12a, 12b) seitlich angeordnete Mitnahmeerhebungen oder -vertiefungen (30, 32), z.B. radial verlaufende Nuten (30), aufweist.

7. Wälzfräser nach einem der Ansprüche 1 bis 6, dadurch gekennzeichnet, daß der Werkzeugkörper (12) mit einer Hartstoffbeschichtung versehen ist, vorzugsweise aus Titannitrid.

## Claims

1. A hob with an annular tool body (12) which is of cermet, which comprises teeth (20) on its periphery, and which is mounted onto a cylindrical steel core (14).

2. A hob according to claim 1, characterised in that the annular tool body (12) is fastened onto the steel core (14), e.g. by soldering in the vacuum furnace.

3. A hob according to claim 1 or 2, characterised in that the original body of the tool body (12) is a sintered blank of cermet which has axially parallel grooves at the periphery and whose toothing is produced by grinding.

4. A hob according to claim 1 to 3, characterised in that the original body comprises helical grooves.

5. A hob according to claim 1 to 3, characterised in that the grooves are ground from solid material.

6. A hob according to claim 1, characterised in that the tool body (12a, 12b) comprises laterally arranged projections or recesses (30, 32), e.g. radially extending grooves (30).

7. A hob according to one of claims 1 to 6, characterised in that the tool body (12) is provided with a hard material coating, preferably of titanium nitride.

## Revendications

1. Fraise-mère développante comportant un corps d'outil annulaire (12) en cermet pourvu de dents (20) à la périphérie, qui est appliqué sur un noyau en acier cylindrique (14).

2. Fraise-mère développante selon la revendication 1, caractérisée en ce que le corps d'outil annulaire (12) est fixé sur le noyau en acier (14), par exemple, par brasage au four à vide.

3. Fraise-mère développante selon la revendication 1 ou 2, caractérisée en ce que le corps de départ du corps de fraise-mère (12) est une ébauche frittée en cermet pourvue à la périphérie de rainures parallèles à l'axe, dont la denture est finie par rectification.

4. Fraise-mère développante selon l'une des revendications 1 à 3, caractérisée en ce que le corps de départ comporte des rainures hélicoïdales.

5. Fraise-mère développante selon l'une des revendications 1 à 3, caractérisée en ce que les rainures sont rectifiées dans la masse.

6. Fraise-mère développante selon la revendication 1, caractérisée en ce que le corps de l'outil (12a, 12b) comporte des bosses ou des creux d'entraînement (30, 32) disposés latéralement, par exemple des rainures radiales (30).

7. Fraise-mère développante selon l'une des revendications 1 à 6, caractérisée en ce que le corps de l'outil (12) est pourvu d'un revêtement en matériau dur, de préférence en nitrure de titane.
